# EUROPÄISCHE PATENTANMELDUNG

(11) **EP 1 713 028 A1**
(43) Veröffentlichungstag der Anmeldung: **18.10.2006**
(21) Anmeldenummer: 06008029.8
(22) Anmeldetag: 18.04.2006
(51) Int. Cl.: G06Q 10/00

(54) **Verfahren zur Optimierung eines Plattenlagers**

(30) Priorität: 15.04.2005 DE 102005017488
(71) Anmelder: BARGSTEDT Maschinen- und Anlagenbau GmbH, 21745 Hemmoor (DE)
(72) Erfinder: Tiedemann, Jörg, 21769 Lamstedt (DE); Schrage, Hartmut, 21745 Hemmoor (DE)
(74) Vertreter: HOFFMANN EITLE

(57) **Zusammenfassung**

Ein Verfahren zur Optimierung eines Plattenlagers in Hinblick auf einen nachgeschalteten Produktionsprozess ordnet jedem Lagerplatz des Plattenlagers ein Prioritätsintervall und jeder Platte eine Priorität zu, und umfasst die folgenden, in beliebiger Reihenfolge wiederholt ablaufenden Schritte: Ein- und Umlagerung von Platten, wobei jede Platte auf einen Platz abgelegt wird, der verfügbar ist und ein die Priorität umfassendes Prioritätsintervall aufweist, oder, falls solch ein Platz nicht verfügbar ist, auf einem verfügbaren Platz abgelegt wird, dessen Prioritätsintervall der Priorität am nächstliegendsten ist; und Auslagerung der Platten, wobei mit jeder aus den Plattenlager ausgelagerten Platte die Priorität aller noch im Plattenlager befindlichen Platten in Bezug auf den Bedarf im nachgeschalteten Produktionsprozess neu bestimmt wird.

## Beschreibung

### Gebiet der Erfindung

Die vorliegende Erfindung bezieht sich auf ein Verfahren zur Optimierung eines Plattenlagers, insbesondere in Hinblick auf einen nachgeschalteten, die Platten verarbeitenden Produktionsprozess.

### Stand der Technik

Plattenlager werden zum Beispiel in der Möbelindustrie benötigt, um Platten verschiedener Größe vor der Weiterbearbeitung zwischenzulagern. In einem solchen Plattenlager werden die Platten, die meist aus Holz oder holzähnlichen Materialien bestehen, waagrecht gelagert, um ein Verziehen aufgrund ihres Gewichts und die Beschädigung ihrer Kanten zu vermeiden. Die Platten werden innerhalb des Lagers von einer Kranbrücke mit Haltevorrichtungen (z.B. Saugtraversen) transportiert und entsprechend ihrer Größe auf verschiedenen Lagerplätzen abgelegt und gestapelt bzw. aufgenommen und ausgelagert. Dabei sollen möglichst Platten gleicher Größe übereinander gestapelt werden, da es durch Überhänge -sofern große Platten auf kleinen Platten zu liegen kommen- zu Verzugserscheinungen kommen kann.

Innerhalb des Lagers gibt es eine Vielzahl von Lagerplätzen für verschiedene Plattengrößen, wobei in der Regel für häufig auftretende Plattengrößen mehrere Lagerplätze vorhanden sind. Zudem können auch Sägestationen vorhanden sein, an denen die Platten bei der Auslagerung zugeschnitten werden. Aufgrund begrenzter Lagerflächen ist es unumgänglich, Platten gleicher Größe, aber verscheidender Identität übereinander auf demselben Stapel abzulegen. Da die einzelnen Platten standardmäßig mittels eines Datenbanksystems verwaltet werden, ist der Fundort einer Platte jederzeit bekannt. Wird eine bestimmte Anzahl von Platten einer Identität benötigt, fährt die Kranbrücke zum entsprechenden Lagerplatz. Liegen die Platten obenauf, werden sie von der Kranbrücke aufgenommen und ausgelagert. Liegen sie jedoch nicht obenauf, müssen erst die darüberliegenden Platten aufgenommen und auf anderen der Plattengröße entsprechenden Lagerplätzen abgelegt werden. Dieser Vorgang wird als Umstapeln bezeichnet. Aus diesem Grund ergibt sich innerhalb der Lagerplätze (Stapel) zwangsweise eine Durchmischung von Platten gleicher Größe, jedoch verschiedener Identität. Mit fortschreitender Auslagerung nimmt diese Durchmischung zu und es werden dementsprechend mehr Umstapelvorgänge benötigt, um an die angeforderten Platten heranzukommen. Zudem müssen bei relativ vollem Lager umgestapelte Platten oft auf von der Auslagerungs- oder Sägestation weiter entfernten Lagerplätzen abgelegt werden, was einen Anstieg der Zugriffszeiten zur Folge hat.

Aufgrund der oben angegebenen Voraussetzungen war bisher einer Steigerung der Produktionseffizienz wegen der Umstapelvorgänge eine Grenze gesetzt, da bei zunehmender Durchmischung einerseits die Anzahl der Umstapelungen und andererseits die für einen Umstapelvorgang notwendige Zeit zunimmt. Schließlich musste sogar die Produktion am Ende des Tages angehalten werden, um das Lager über die Nachtstunden hinweg umzustapeln und wieder eine für die folgende Produktionsschicht geeignete Plattenorganisation innerhalb des Lagers zu erzielen. Nicht nur musste hierfür mindestens eine Arbeitskraft für die Nachtschicht abgestellt werden, sondern es entstanden hierdurch auch höhere Kosten aufgrund der angehaltenen Produktion. Längere Zugriffs- und Transportzeiten der Kranbrücke trugen ebenfalls zu erhöhten Betriebskosten bei.

### Darstellung der Erfindung

Aufgabe der vorliegenden Erfindung ist es daher, ein Verfahren zur Optimierung eines Plattenlagers in Hinblick auf einen nachgeschalteten Produktionsprozess zu entwickeln, der die Anzahl von Umstapelvorgängen auf das kleinstmögliche Maß beschränkt und eine Verkürzung der Zugriffs- und Transportzeiten ermöglicht.

Für das erfindungsgemäße Verfahren zur Optimierung eines Plattenlagers in Hinblick auf einen nachgeschalteten Produktionsprozess wird jedem Lagerplatz des Plattenlagers ein Prioritätsintervall und jeder Platte eine Priorität zugeordnet. Die Priorität ist hierbei ein diskreter Parameter, der zum Beispiel durch eine Prozentzahl von 0 bis 100 ausgedrückt werden kann und für jede Platte einer Identität charakteristisch ist. Das Prioritätsintervall ist dementsprechend ein kontinuierliches Intervall, welches die Aufgabe hat, Platten mit innerhalb der Intervallgrenzen liegenden Prioritäten den optimalen Lagerplatz zuzuordnen. Die Prioritätsintervalle der Lagerplätze sind zum Beispiel nach oben halboffene Intervalle, können jedoch auch nach unten halboffene Intervalle sein. Zudem ist vorgesehen, dass Prioritätsintervalle verschiedener Lagerplätze einer Plattengröße identisch oder aufeinanderfolgend sein können, sich jedoch nicht lediglich teilweise überschneiden können.

Das erfindungsgemäße Verfahren umfasst die folgenden, in beliebiger Reihenfolge wiederholt ablaufenden Schritte:
die Ein- und Umlagerung von Platten, wobei jede Platte auf einen Platz abgelegt wird, der verfügbar ist und ein die Priorität umfassendes Prioritätsintervall aufweist, oder, falls solch ein Platz nicht verfügbar ist, auf einem verfügbaren Platz abgelegt wird, dessen Prioritätsintervall der Priorität am nächstliegendsten ist; und
die Auslagerung der Platten, wobei mit jeder aus den Plattenlager ausgelagerten Platte die Priorität aller noch im Plattenlager befindlichen Platten in Bezug auf den Bedarf im nachgeschalteten Produktionsprozess neu bestimmt wird.
Somit wird durch dieses Verfahren die Plattenpriorität entsprechend dem aktuellen Bedarf der Produktion kontinuierlich angepasst. Hierdurch kann die Anzahl und Dauer von Umstapelvorgängen merkbar reduziert werden, da es mit fortschreitendem Verfahrenslauf wahrscheinlicher wird, eine Platte obenauf oder zumindest nah an der Oberfläche auf dem entsprechenden Stapel zu finden. Aufgrund der optimierten Umstapelung "wandern" die Platten bei laufender Produktion automatisch auf die "richtigen" Lagerplätze, d.h. diejenigen Lagerplätze, die Auslagerungszeiten und Umstapelvorgänge reduzieren.

Bevorzugt wird bei der Auslagerung der Platten die Priorität der im Plattenlager befindliche Platten anhand des Anteils der ausgelagerten Platten am Bedarf ermittelt. Die Bewertung anhand des Anteils ist die für den Anwender wohl wichtigste Art, den Bedarf zu quantifizieren, und führt zu einer Lageroptimierung anhand der von der Produktion benötigten Stückzahlen.

Vorteilhafterweise wird beim erfindungsgemäßen Verfahren zur Optimierung eines Plattenlagers erst nach einer Anzahl von Auslagerungen die Priorität einer Platte neu bestimmt. Dadurch ist es möglich, eventuelle Bedarfsspitzen der Produktion bei der Bewertung zu dämpfen, so dass nicht unnötig Prioritäten herauf- und wieder heruntergesetzt werden müssen.

Ebenso ist es vorteilhaft beim erfindungsgemäßen Verfahren den Bedarf innerhalb eines einstellbaren Zeitraum zu bestimmen. Dadurch kann die Optimierung beispielsweise auf lediglich einen Teil eines Tages, oder mehrere Tage ausgerichtet werden. So kann zum Beispiel auf vom Anwender vorhergesehene Bedarfsveränderungen reagiert werden, so dass die ermittelten Produktionsanteile der Platten auch den tatsächlichen Verhältnissen entsprechen.

Die Ermittlung des Anteils der ausgelagerten Platte am Bedarf kann bevorzugt automatisch durchgeführt oder manuell eingeleitet werden. Hierdurch ist es möglich, je nach Wunsch des Anwenders gezielt Neubewertungen vorzunehmen.

Besonders vorteilhaft ist es, beim Schritt der Auslagerung die angeforderte Platte wahlweise von einem Lagerplatz mit dem am meisten von der Priorität abweichenden Prioritätsintervall oder von einem Lagerplatz mit dem der Priorität am nächstliegenden Prioritätsintervall zu holen. Im ersten Fall erfolgt dabei die laufende Optimierung der Plattenbewegungen relativ schnell, was jedoch zu einer zeitweise erhöhten Umstapelung führen kann. Im zweiten Fall erfolgt die Optimierung bei Umstapelung/Auslagerung von Plätzen, auf denen die Platte noch liegt, welche jedoch für die Platte nicht mehr optimal sind. Dieser Vorgang verursacht weniger Umstapelungen, führt jedoch langsamer zum optimalen Ergebnis. Der Anwender hat daher die Möglichkeit, gezielt nach Aufwand oder Zeit zu optimieren.

Bevorzugt können die den Lagerplätzen zugewiesenen Prioritätsintervalle wahlweise mit Schwerpunkt auf geringen Anteil am Bedarf oder mit Schwerpunkt auf hohen Anteil am Bedarf feiner unterteilt werden. Dadurch kann gezielt die anwenderspezifische Vielfalt der Plattensorten berücksichtigt werden, wie zum Beispiel "viele Plattensorten, geringe Stückzahlen" bzw. "wenige Plattensorten, hohe Stückzahlen".

Es ist zudem vorteilhaft, dass das Plattenlager in Zonen aufgeteilt wird und innerhalb jeder Zone die in den vorhergehenden Ansprüchen genannten Parameter zonenspezifisch bestimmt werden. Hierdurch ist es möglich beispielsweise bei Lagern mit mehreren Sägen die Prioritäten der Sägen für die zugehörigen Lagerplätze zu berücksichtigen.

Dementsprechend ist es bevorzugt, dass das im Vorangegangenen beschriebene Verfahren innerhalb der Zonen angewandt wird. Somit lassen sich die oben genannten Vorteile innerhalb jeder Zone realisieren.

Schließlich wird vorteilhafterweise ein Datenträger verwendet, der die Verfahrenschritte des im Vorangegangenen beschriebenen Verfahrens umfasst.

### Kurze Beschreibung der Zeichnungen

Im folgenden wird die Erfindung anhand eines Ausführungsbeispiels erläutert.
Figur 1 zeigt eine schematische Darstellung eines Plattenlagers gemäß einer Ausführungsform der Erfindung
Figur 2 zeigt eine Tabelle, welche die Verteilung von Lagerplätzen und den zugeordneten Prioritätsintervallen zeigt.
Figur 3 zeigt eine grafische Darstellung der Tabelle in Figur 2.

### Wege zur Ausführung der Erfindung

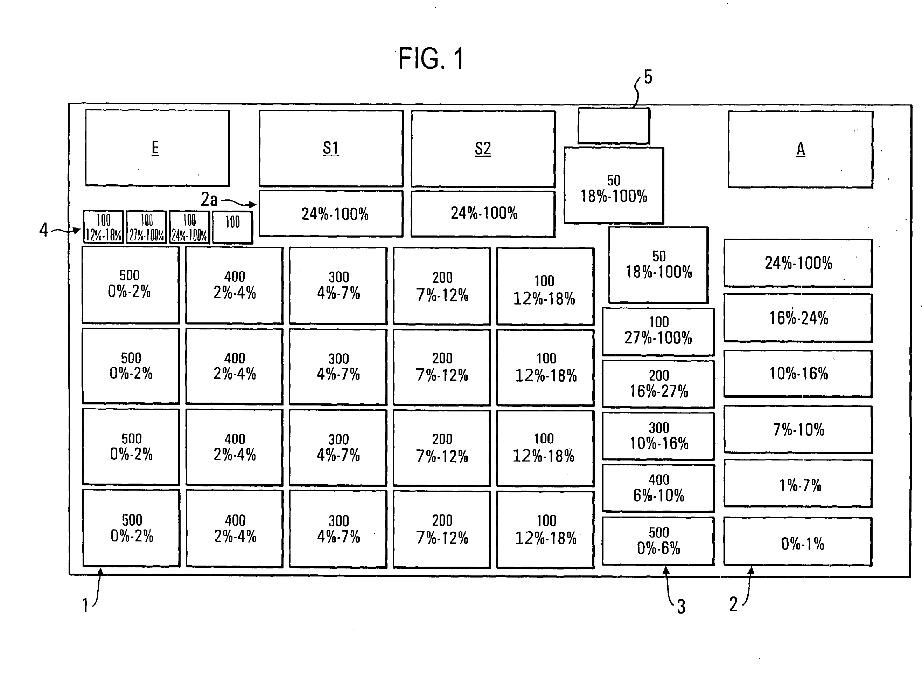

In Figur 1 ist eine schematische Ansicht eines Plattenlagers dargestellt, auf welches das erfindungsgemäße Verfahren entsprechend der im folgenden beschriebenen Ausführungsform angewendet wird. Das Lager umfasst eine Vielzahl von Lagerplätzen die entsprechend der Größe der darauf ablegbaren Platten in Zonen aufgeteilt sind, z.B. Zone **1** für Plattengrößen von 2750 x 2100 mm. Zusätzlich sind ein Einlagerplatz **E,** ein Auslagerplatz **A,** sowie zwei Sägestationen **S1** und **S2** für den Zuschnitt der auszulagernden Platten vorhanden. Das Lager ist im vorliegenden Fall in fünf Zonen **1** bis **5** aufgeteilt, von denen jede mindestens einen Lagerplatz umfasst. Jedem Lagerplatz einer Zone ist ein Prioritätsintervall zugewiesen, und mehrere Lagerplätze können das selbe Prioritätsintervall besitzen. Die Prioritätsintervalle sind in dieser Ausführungsform Intervalle von Anteilen der Platten an der Gesamtproduktion.

Innerhalb der Zonen sind die Lagerplätze anhand ihrer Prioritätsintervalle so angeordnet, dass Plätze mit hohen Intervallwerten, z.B. 18%-100% in Zone **1,** näher am Auslagerungsplatz **A** bzw. an den Sägestationen **S1, S2** positioniert sind als Plätze mit niedrigen Intervallwerten. Hierbei können Zonen auch räumlich getrennt werden (Zone **2, 2b),** um Plätze hoher Prioritätsintervalle möglichst nah an den Auslagerungsplatz bzw. die Sägen zu legen. Aufgrund der beschriebenen Anordnung können die Zugriffs- und Transportzeiten der Kranbrücke (nicht gezeigt) für die Platten mit den höchsten Produktionsanteilen (Prioritäten) minimiert werden.

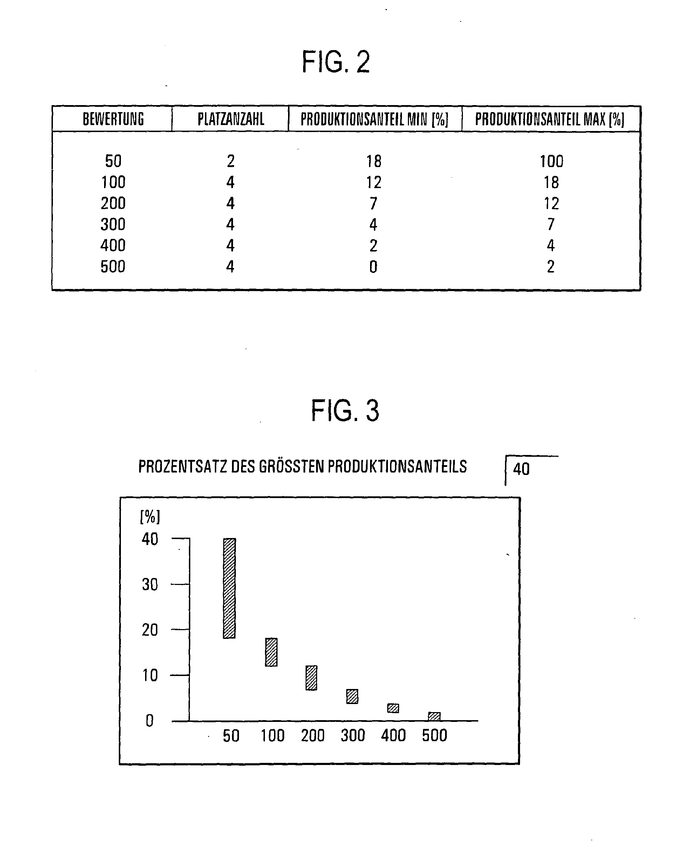

In Figur 2 ist tabellarisch und in Figur 3 ist grafisch die Unterteilung der Zone **1** bei einer höheren Gewichtung geringer Produktionsanteile gezeigt. Demnach gibt es in Zone **1** jeweils vier Plätze mit den Prioritätsintervallen 0%-2% (Bewertungszahl 500), 2%-4% (400), 4%-7% (300), 7%-12% (200) und 12%-18% (100), und zwei Plätze mit den Intervallen 18%-100% (50).

Die Konfiguration/Initialisierung der Lagerplätze und der Optimierungsparameter wie z.B. Intervallgrößen, Intervallanzahl, Bewertungszeiträume usw. muss nur einmal zu Beginn des Verfahrens durchgeführt werden. Nach Einlagerung der Platten anhand der Initialisierungsvorgaben wird bei jedem Auslagerungsvorgang einer Platte dessen Anteil an der Gesamtproduktion ermittelt, in eine Priorität übersetzt, und allen Platten gleicher Identität im Lager zugewiesen. Es ist zu bemerken, dass die Zuweisung einer Priorität an Platten einer Identität zwangsweise auch die Prioritäten von Platten anderer Identität ändert. Dementsprechend kann diese Änderung der Priorität bei Bewegungen (Einlagerung, Umstapelung) berücksichtigt werden, indem beispielsweise Platten der Maße 2750x2100 (Zone **1)** und der Identität ID0, deren Anteil an der Gesamtproduktion 15% beträgt, möglichst nur auf Plätze der 5. Reihe von links (Intervall 12%-18%) der Zone **1** abgelegt werden. Sollten diese Plätze gefüllt sein, wird auf die "nächstbesten" Plätze der 4. Reihe v.l. (Intervall 7%-12%) ausgewichen.

Ändert sich nun beim Auslagern der Platten mit ID0 deren Priorität von 15% auf 19%, so werden bei folgenden Einlagerungen und Umstapelungen alle im Lager befindlichen Platten mit ID0 von den Plätzen mit Intervallen 12%-18% (und ggf. 7%-12% usw.) auf Plätze mit dem Intervall 18%-100% abgelegt, und somit deren Zugriffszeiten (oben im Stapel) und Transportzeiten (näher am Auslagerungsplatz/Säge) verbessert. Für auf dem Lagerplatz des Intervalls 12%-18% verbleibende Platten einer anderen Identität ID1 verbessern sich auch die Zugriffszeiten, da sie jetzt innerhalb des Lagerplatzes (Stapels) im Mittel höher oben liegen.

Beim Auslagern kann zudem bestimmt werden, ob Platten der ID0 nun von Lagerplätzen mit dem zur Plattenpriorität (18%) am meisten passenden (18%-100%) oder von Plätzen mit dem am wenigsten passenden (7%-12%) Prioritätsintervall geholt werden. Letzteres führt zu einer schnelleren Optimierung, da der Auslagerungsvorgang selbst gleichzeitig optimiert, erzeugt jedoch mehr Umstapelvorgänge als die erste Variante, da Platten auf am wenigsten passenden Plätzen im Mittel tiefer im Stapel liegen als Platten auf am meisten passenden Plätzen. Bei der ersten Variante hingegen wird beim Auslagern nicht optimiert (die vorangegangene Optimierung wird lediglich ausgenutzt) und die Optimierung erfolgt durch Einlagerung und Umstapelung. Da weniger Umstapelungen als in der zweiten Variante stattfinden, dauert die Optimierung länger.

Mit dem beschriebenen Verfahren "wandern" also die Platten automatisch in die für sie in Bezug auf Zugriffs- und Transportzeiten am meisten geeigneten Lagerplätze, und kommen auch innerhalb der Lagerplätze höher zu liegen. Die Anzahl der benötigten Umstapelungen wird dadurch minimiert.

## Patentansprüche

1. Verfahren zur Optimierung eines Plattenlagers in Hinblick auf einen nachgeschalteten Produktionsprozess wobei jedem Lagerplatz des Plattenlagers ein Prioritätsintervall und jeder Platte eine Priorität zugeordnet wird, umfassend die folgenden, in beliebiger Reihenfolge wiederholt ablaufenden Schritte:
- Ein- und Umlagerung von Platten, wobei jede Platte auf einen Platz abgelegt wird, der verfügbar ist und ein die Priorität umfassendes Prioritätsintervall aufweist, oder, falls solch ein Platz nicht verfügbar ist, auf einem verfügbaren Platz abgelegt wird, dessen Prioritätsintervall der Priorität am nächstliegendsten ist;
- Auslagerung der Platten, wobei mit jeder aus den Plattenlager ausgelagerten Platte die Priorität aller noch im Plattenlager befindlichen Platten in Bezug auf den Bedarf im nachgeschalteten Produktionsprozess neu bestimmt wird.

2. Verfahren zur Optimierung eines Plattenlagers nach Anspruch 1, wobei bei der Auslagerung der Platten die Priorität der im Plattenlager befindliche Platten anhand des Anteils der ausgelagerten Platten am Bedarf ermittelt wird.

3. Verfahren zur Optimierung eines Plattenlagers nach Anspruch 1 oder 2, wobei erst nach einer Anzahl von Auslagerungen die Priorität neu bestimmt wird.

4. Verfahren zur Optimierung eines Plattenlagers nach Anspruch 1, 2 oder 3, wobei der Bedarf innerhalb eines einstellbaren Zeitraum bestimmt wird.

5. Verfahren zur Optimierung eines Plattenlagers nach einem der vorangehenden Ansprüche, wobei die Ermittlung des Anteils der ausgelagerten Platte am Bedarf automatisch durchgeführt oder manuell eingeleitet wird.

6. Verfahren zur Optimierung eines Plattenlagers nach einem der vorangehenden Ansprüche, wobei beim Schritt der Auslagerung die angeforderte Platte wahlweise von einem Lagerplatz mit dem am meisten von der Priorität abweichenden Prioritätsintervall oder von einem Lagerplatz mit dem der Priorität am nächstliegenden Prioritätsintervall geholt wird.

7. Verfahren zur Optimierung eines Plattenlagers nach einem der vorangehenden Ansprüche, wobei die den Lagerplätzen zugewiesenen Prioritätsintervalle wahlweise mit Schwerpunkt auf geringen Anteil am Bedarf oder mit Schwerpunkt auf hohen Anteil am Bedarf feiner unterteilt werden können.

8. Verfahren zur Optimierung eines Plattenlagers nach einem der vorangehenden Ansprüche, wobei das Plattenlager in Zonen aufgeteilt wird und innerhalb jeder Zone die in den vorhergehenden Ansprüchen genannten Parameter zonenspezifisch bestimmt werden.

9. Verfahren zur Optimierung eines Plattenlagers nach Anspruch 8, wobei das Verfahren nach einem der Ansprüche 1 bis 7 innerhalb der Zonen angewandt wird.

10. Datenträger, die Verfahrenschritte des Verfahrens nach einem der Ansprüche 1-9 umfassend.
